# EUROPEAN PATENT APPLICATION

(11) **EP 4 679 027 A1**
(43) Date of publication of application: **14.01.2026**
(21) Application number: 24223836.8
(22) Date of filing: 31.12.2024
(51) Int. Cl.: G01B 3/1005, G01B 3/1043, G01B 3/102

(54) **TAPE MEASURE WITH BEARINGS ON THE CORE SHAFT OF THE TAPE MEASURE**

(30) Priority: 12.07.2024 CN 202421667581 U
(71) Applicant: Bonthe Group Co., Ltd., Shangqiu, Henan (CN)
(72) Inventor: Hu, Yongxin, Shangqiu, Henan (CN)
(74) Representative: Cabinet Chaillot

(57) **Abstract**

A tape measure with bearings on the core shaft of the tape measure includes a first tape measure housing and a second tape measure housing, inner wall of first tape measure housing and inner wall of second tape measure housing are snap-fitted in opposite directions, centers of inner walls of first tape measure housing and second tape measure housing are inserted with an aluminium core shaft, outside center of aluminium core shaft is sleeved with a tape measure core, both sides of tape measure core inner wall are inserted with first bearings, an inner wall of first bearings is sleeved on outside of the tape measure core, outside of first tape measure housing and second tape measure housing is jointly movably mounted with an upper brake block, bottom side of first tape measure housing and second tape measure housing inner wall is jointly provided with a bottom brake block.

## Description

### 1. Technical Field

The invention belongs to the technical field of tape measures, specifically relates to a tape measure with bearings on the core shaft of the tape measure.

### 2. Background Art

Tape measures are commonly used tools in everyday life, wherein the steel tape measures are often seen and commonly used in construction and decoration, and are also one of the essential tools for the family. Tape measures are divided into fiber tape measure, leather tape measure, waist tape measure and so on. Luban ruler, Fengshui ruler, Wengong ruler is also belong to the steel tape measure.

Most of the tape measure cores on the market are rotated by the internal ribbing of the tape measure housing, and if the ribbing is not processed properly or the product is not installed perfectly, the core of the tape measure will shake too much when it is rotating. Therefore, in order to solve such problems, we propose a tape measure with a bearing on the core shaft of the tape measure.

### 3. Summary of the Invention

The invention aims to overcome shortcomings in prior art, and proposes a tape measure with bearings on the core shaft of the tape measure.

In order to realize the purpose, the invention provides the following technical solution:
a tape measure with bearings on the core shaft of the tape measure includes a first tape measure housing and a second tape measure housing, an inner wall of the first tape measure housing and an inner wall of the second tape measure housing are snap-fitted in opposite directions, centers of inner walls of the first tape measure housing and second tape measure housing are inserted with an aluminium core shaft, an outside center of aluminium core shaft is sleeved with a tape measure core, both sides of the tape measure core inner wall are inserted with first bearings, an inner wall of the first bearings is sleeved on an outside of the tape measure core, an outside of the first tape measure housing and second tape measure housing is jointly movably mounted with an upper brake block, a bottom side of the first tape measure housing and second tape measure housing inner wall is jointly provided with a bottom brake block, one side bottom of the first tape measure housing and second tape measure housing is jointly embedded with a wear-resistant tape mouth, one side of the first tape measure housing and second tape measure housing being located at a top of the wear-resistant tape mouth is provided with a cleaning part jointly.

Preferably, a bottom of the upper brake block extends into an interior of the first tape measure housing and second tape measure housing.

Preferably, the cleaning part comprises a carrier plate, and one side of the carrier plate is connected to the first tape measure housing and second tape measure housing respectively; a support sleeve is connected to a center of a top of the carrier plate, and a lifting rod is provided at a top of the support sleeve.

Preferably, a bottom of the lifting rod runs through the support sleeve and the carrier plate and is threaded with a screw barrel, a bottom of the screw barrel is connected with a curved cleaning plate, and screw threads on an outside of the lifting rod are provided at a bottom of the outside thereof.

Preferably, a top of an exterior of the lifting rod is movably sleeved with a rotating sleeve via a second bearing, a top of the lifting rod is connected with a rotating disk, the exterior of the lifting rod is sleeved with a spring, a top of the spring is connected with a bottom of the rotating sleeve, a bottom of the spring is connected with the top of the support sleeve, and the exterior of the lifting rod is slidably contacted with an inner wall of the support sleeve.

Compared with the prior art, the beneficial effects of the invention are as follows:
In the invention, through cooperation of the aluminum core shaft, first bearing and the tape measure core, when the tape of the tape measure is pulled out, the fist bearing drives the tape measure to rotate, while other parts do not rotate, so that the pulling out and retraction action of the tape of the tape measure is smoother, the noise is small, and the overall cost of the tape measure is lower.

### 4. Brief Description of Accompany Drawings

FIG. 1 shows an axonometrical drawing of the invention;
FIG. 2 shows a top view of FIG. 1 of the invention;
FIG. 3 shows an exploded view of the invention;
FIG. 4 shows a top view of FIG. 3 of the invention;
FIG. 5 shows an axonometrical drawing of the cleaning part of the invention;
FIG. 6 shows a bottom view of FIG. 5 of the invention.

As shown in the accompanying drawings: 1 first tape measure housing, 2 second tape measure housing, 3 cleaning part, 31 carrier plate, 32 curved cleaning plate, 33 support sleeve, 34 rotating disk, 35 lifting rod, 36 spring, 37 screw barrel, 38 rotating sleeve, 4 upper brake block, 5 wear-resistant tape mouth, 6 bottom brake block, 7 aluminium core shaft, 8 first bearing, 9 tape measure core.

### 5. Specific Embodiment of the invention

The technical scheme of the invention is further described clearly and detailedly hereinafter with reference to the drawings. Obviously, only partial embodiments of the invention are shown and the actual structure is not limited thereto.

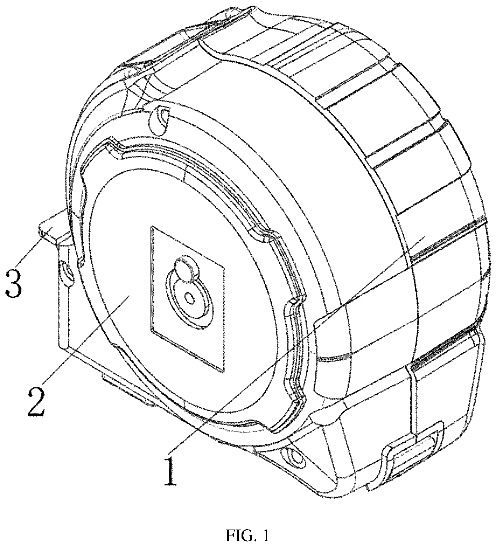

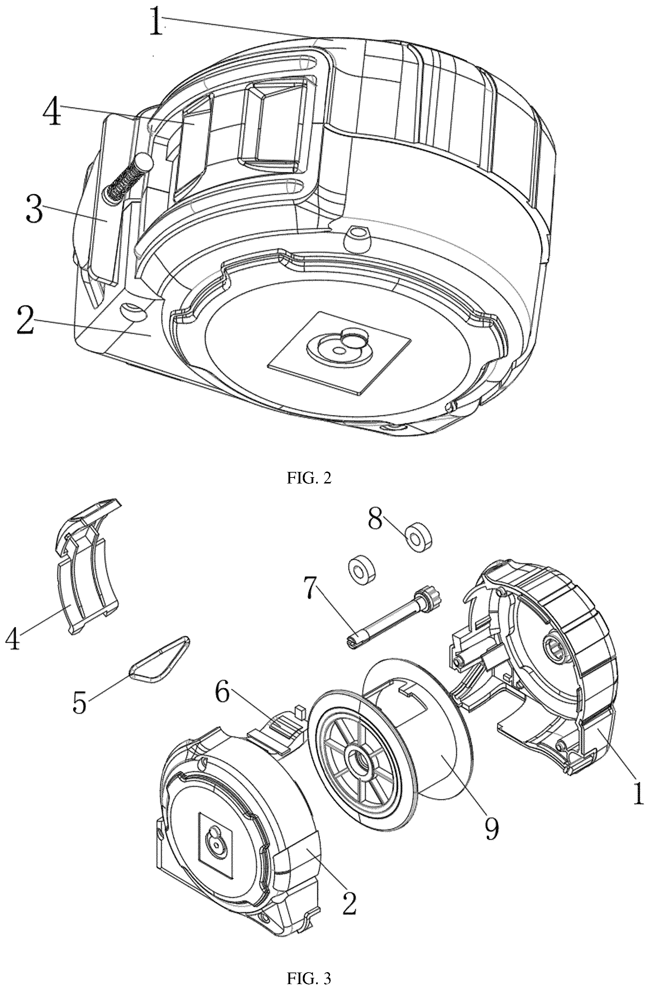

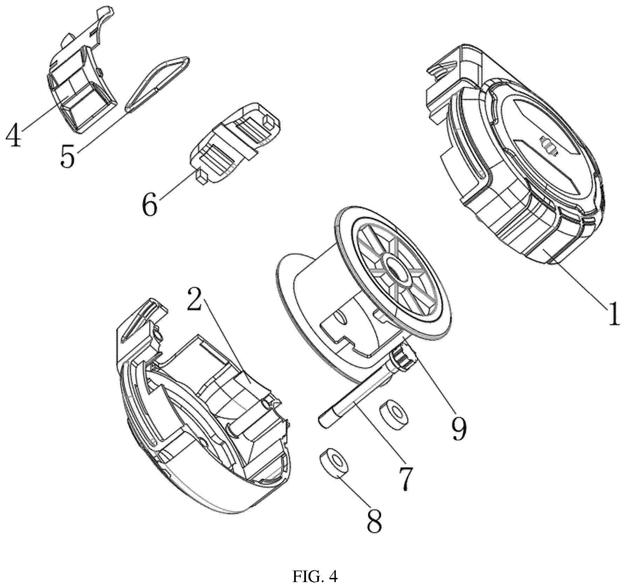

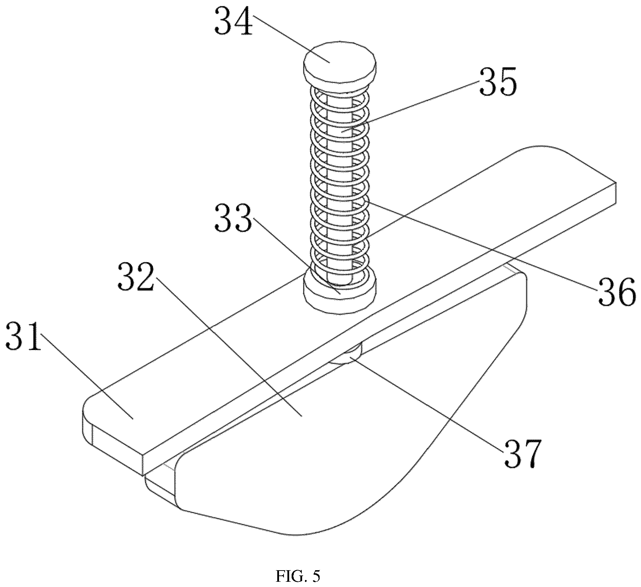

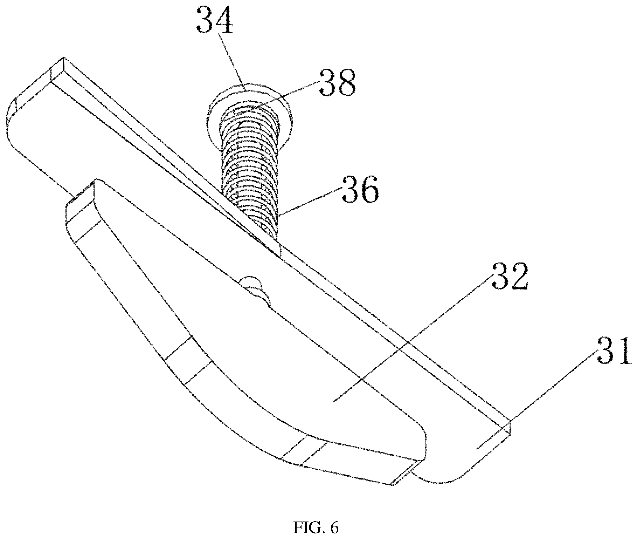

With reference from FIG. 1 to FIG. 6, a tape measure with bearings on the core shaft of the tape measure includes a first tape measure housing 1 and a second tape measure housing 2, an inner wall of the first tape measure housing 1 and an inner wall of the second tape measure housing 2 are snap-fitted in opposite directions, centers of inner walls of the first tape measure housing 1 and second tape measure housing 2 are inserted with an aluminium core shaft 7, an outside center of aluminium core shaft 7 is sleeved with a tape measure core 9, both sides of the tape measure core 9 inner wall are inserted with first bearings 8, an inner wall of the first bearings 8 is sleeved on an outside of the tape measure core 9, an outside of the first tape measure housing 1 and second tape measure housing 2 is jointly movably mounted with an upper brake block 4, a bottom side of the first tape measure housing 1 and second tape measure housing 2 inner wall is jointly provided with a bottom brake block 6, one side bottom of the first tape measure housing 1 and second tape measure housing 2 is jointly embedded with a wear-resistant tape mouth 5, one side of the first tape measure housing 1 and second tape measure housing 2 being located at a top of the wear-resistant tape mouth 5 is provided with a cleaning part 3 jointly.

As a preferred technical solution of the invention, a bottom of the upper brake block 4 extends into an interior of the first tape measure housing 1 and second tape measure housing 2.

As a preferred technical solution of the invention, the cleaning part 3 comprises a carrier plate 31, and one side of the carrier plate 31 is connected to the first tape measure housing 1 and second tape measure housing 2 respectively; a support sleeve 33 is connected to a center of a top of the carrier plate 31, and a lifting rod 35 is provided at a top of the support sleeve 33.

As a preferred technical solution of the invention, a bottom of the lifting rod 35 runs through the support sleeve 33 and the carrier plate 31 and is threaded with a screw barrel 37, a bottom of the screw barrel 37 is connected with a curved cleaning plate 32, and screw threads on an outside of the lifting rod 35 are provided at a bottom of the outside thereof.

As a preferred technical solution of the invention, a top of an exterior of the lifting rod 35 is movably sleeved with a rotating sleeve 38 via a second bearing, a top of the lifting rod 35 is connected with a rotating disk 34, the exterior of the lifting rod 35 is sleeved with a spring 36, a top of the spring 36 is connected with a bottom of the rotating sleeve 34, a bottom of the spring 36 is connected with the top of the support sleeve 33, and the exterior of the lifting rod 35 is slidably contacted with an inner wall of the support sleeve 33; the spring 36 is supported by the cooperation of the rotating sleeve 38 and the support sleeve 33, so that the spring 36 does not follow the rotation of the rotating disk 34 when it rotates.

When the invention is used, when the tape of the tape measure is pulled out, the fist bearing 8 drives the tape measure to rotate, while other parts do not rotate, so that the pulling out and retraction action of the tape of the tape measure is smoother, the noise is small, and the overall cost of the tape measure is lower. When the scale of the tape measure is not clear, the rotating disk 34 can be pressed downwards to enable the lifting rod 35 to move downwards, the spring 36 is compressed, and the curved cleaning plate 32 is contacted with the tape to clean the tape in the tape pulling process. When the curved cleaning plate 32 needs to be detached for cleaning, the rotating disk 34 is rotated to drive the lifting rod 35 to rotate, so that the bottom of the lifting rod 35 is separated from the screw barrel 37, the curved cleaning plate 32 can be removed for cleaning, and is installed to the original position after cleaning.

The invention and its embodiments have been described above, but the description is not limited thereto; only one embodiment of the invention is shown in the drawings, and the actual structure is not limited thereto. In general, it is to be understood by those skilled in the art that non-creative design of structural forms and embodiments that are similar to the technical solutions without departing from the spirit of the invention shall all fall within the protective scope of the invention.

## Claims

1. A tape measure with bearings on the core shaft of the tape measure, including a first tape measure housing and a second tape measure housing, an inner wall of the first tape measure housing and an inner wall of the second tape measure housing are snap-fitted in opposite directions, centers of inner walls of the first tape measure housing and second tape measure housing are inserted with an aluminium core shaft, an outside center of aluminium core shaft is sleeved with a tape measure core, both sides of the tape measure core inner wall are inserted with first bearings, an inner wall of the first bearings is sleeved on an outside of the tape measure core, an outside of the first tape measure housing and second tape measure housing is jointly movably mounted with an upper brake block, a bottom side of the first tape measure housing and second tape measure housing inner wall is jointly provided with a bottom brake block, one side bottom of the first tape measure housing and second tape measure housing is jointly embedded with a wear-resistant tape mouth, one side of the first tape measure housing and second tape measure housing being located at a top of the wear-resistant tape mouth is provided with a cleaning part jointly.

2. The tape measure with bearings on the core shaft of the tape measure of claim 1, wherein a bottom of the upper brake block extends into an interior of the first tape measure housing and second tape measure housing.

3. The tape measure with bearings on the core shaft of the tape measure of claim 1, wherein the cleaning part comprises a carrier plate, and one side of the carrier plate is connected to the first tape measure housing and second tape measure housing respectively; a support sleeve is connected to a center of a top of the carrier plate, and a lifting rod is provided at a top of the support sleeve.

4. The tape measure with bearings on the core shaft of the tape measure of claim 3, wherein a bottom of the lifting rod runs through the support sleeve and the carrier plate and is threaded with a screw barrel, a bottom of the screw barrel is connected with a curved cleaning plate, and screw threads on an outside of the lifting rod are provided at a bottom of the outside thereof.

5. The tape measure with bearings on the core shaft of the tape measure of claim 3, wherein a top of an exterior of the lifting rod is movably sleeved with a rotating sleeve via a second bearing, a top of the lifting rod is connected with a rotating disk, the exterior of the lifting rod is sleeved with a spring, a top of the spring is connected with a bottom of the rotating sleeve, a bottom of the spring is connected with the top of the support sleeve, and the exterior of the lifting rod is slidably contacted with an inner wall of the support sleeve.
